# EUROPEAN PATENT APPLICATION

(11) **EP 4 603 678 A1**
(43) Date of publication of application: **20.08.2025**
(21) Application number: 25156046.2
(22) Date of filing: 05.02.2025
(51) Int. Cl.: F01D 5/28, B32B 5/18, B32B 9/00, B32B 9/04, C04B 37/02, F01D 25/26

(54) **THERMAL BARRIER STRUCTURE FOR COATING A SUBSTRATE**

(30) Priority: 13.02.2024 GB 202401942
(71) Applicant: Rolls-Royce plc, London N1 9FX (GB)
(72) Inventor: Groves, David, Derby, DE24 8BJ (GB)
(74) Representative: Rolls-Royce plc

(57) **Abstract**

There is described a thermal barrier structure (200) for coating a substrate (230, Fig. 2B) such as a hot gas wash surface of a gas turbine engine component, the thermal barrier structure comprising: a first layer (201) comprising a ceramic material; a second layer (202) comprising a metal foam, and a third layer (203) comprising the ceramic material and the metal foam.

## Description

### TECHNICAL FIELD

The present disclosure relates to a thermal barrier structure and is particularly, although not exclusively, concerned with a thermal barrier structure for coating gas turbine engine components.

### BACKGROUND

In high temperature environments, such as sections of a gas turbine engine downstream of the combustor, it is common for metal components to be subjected to elevated temperatures (e.g., up to 1200 °C), often close to or in excess of their melting points, over a prolonged duration.

In order to reduce the effects of elevated temperatures on these components (e.g., creep, oxidation, etc.), a thermal barrier coating may be provided on the surface of the component. The thermal barrier coating reduces the flow of heat into the component and so partially insulates the component from its environment, thereby prolonging its lifespan.

Thermal barrier coatings often comprise a ceramic. However, ceramics typically have a lower coefficient of thermal expansion than their metal substrates. Accordingly, the thickness of the thermal barrier coating may be limited so as to avoid fracture and other modes of failure due to differential expansion during operating cycles. The degree of protection afforded by a thermal barrier coating to its component substrate may therefore be limited due to the differences in coefficients of thermal expansion.

Improvements are desired in the art of thermal barrier coatings.

### SUMMARY

According to a first aspect of the present disclosure, there is provided a thermal barrier structure for coating a substrate or component, the thermal barrier structure comprising: a first layer comprising a ceramic material; a second layer comprising a metal foam and a third layer comprising the ceramic material and the metal foam..

The thermal barrier structure may be a thermal barrier structure for coating a metal substrate, such as a hot gas wash surface of a gas turbine engine component, such as a component downstream of the combustor and/or a hot end gas turbine engine component. The thermal barrier structure may be a thermal barrier structure for forming a thermal barrier coating. The thermal barrier structure may be configured to be attached to a substrate so as to form a thermal barrier coating.

The second layer may be configured to be provided closer to the substrate than is the first layer. The second layer may be for attachment (e.g., may be configured to be attached) to the substrate.

The first layer may be for forming (e.g., may be configured to form) an outermost surface of the thermal barrier structure (e.g., so as to form an outermost surface of the coated substrate). The first layer may be configured to: form a substitute gas wash surface; form a substitute external surface of the coated component; be outwardly facing; face into an operating environment; and/or face away from the substrate.

The metal foam and the ceramic material may extend continuously into the third layer. The third layer may be provided between the first layer and the second layer. The first, second and third layers may be provided immediately adjacent one another.

In the third layer, the ceramic material may be interspersed with the metal foam. For example, the ceramic material may impregnate and/or fill the cells of the metal foam.

The first, second and third layers may be distinct, discrete, separate or otherwise not overlapping. The first, second and third layers may be stacked, such as along a thickness direction. The first layer may consist essentially of the ceramic material. For example, the first layer may not comprise the metal foam. The second layer may consist essentially of the metal foam. For example, the second layer may not comprise ceramic and/or may comprise pores or cells which are not impregnated by ceramic (e.g., unimpregnated or vacant pores or cells). The third layer may consist essentially of the ceramic material and the metal foam.

Alternatively, the first, second and third layers may not be distinct. The third layer may be defined by an overlap between the first layer and the second layer. The first and second layers may be stacked along a thickness direction. The second layer may comprise pores or cells which are not impregnated by ceramic (e.g., unimpregnated or vacant pores or cells).

The ceramic material may comprise an oxide-based ceramic, optionally an alumina, silica and/or aluminosilicate ceramic composition. The ceramic material may comprise a geopolymer, a sol-gel, or an aluminium phosphate. The first layer (e.g., the ceramic material) may comprise or consist of only one material or may be co-moulded as two or more materials. For example, the first layer may comprise metallic or non-metallic material dispersed throughout the ceramic material to aid with physical or thermal properties.

The metal foam may comprise an open cell foam. The metal foam may have a porosity of at least 10 pores per inch, optionally at least 100 pores per inch. The metal foam may have pores of dimensions (e.g., mean pore dimensions) between 0.1 mm and 10 mm. The metal foam may comprise a nickel alloy.

The thermal barrier structure may further comprise a backing plate or sheet adjacent the second layer. The backing plate or sheet may be a metal backing plate or sheet. The second layer may be attached to the backing plate. The backing plate may be configured to be attached to the substrate (e.g., configured to attach the thermal barrier structure to the substrate, such as instead of the second layer).

The first layer may have a thickness of at least 0.1 mm, such as at least 2 mm. The second layer may have a thickness of at least 2 mm. The third layer may have a thickness of at least 1 mm; up to 2 mm; and/or between 1 mm and 2 mm. The present aspect may form part of and/or be used in conjunction with any other aspect.

According to a second aspect of the present disclosure, there is provided a thermal barrier coating comprising the thermal barrier structure of the first aspect. The thermal barrier coating may comprise the thermal barrier structure once applied to a substrate or component. The present aspect may form part of and/or be used in conjunction with any other aspect.

According to a third aspect of the present disclosure, there is provided a component or article comprising the thermal barrier structure of the first aspect and/or the thermal barrier coating of the second aspect. The thermal barrier structure may be applied to the component substrate as a thermal barrier coating. The component may comprise a component of gas turbine engine, such as a component having a hot gas wash surface.

The second layer may attach the thermal barrier coating to the component/substrate. A backing plate may attach the thermal barrier coating to the component/substrate. The second layer may be provided closer to the component/substrate than is the first layer. The first layer may form an outermost or external surface of the thermal barrier coating (e.g., a substitute gas wash surface).

The thermal barrier coating may be applied to the substrate/component such that the layers are provided in the following order: substrate/component, optional backing plate, second layer, third layer, first layer, environment. For example, these layers may be provided immediately adjacent one another.

The component may comprise a gas turbine engine component, optionally an inner casing component downstream of the combustor. The present aspect may form part of and/or be used in conjunction with any other aspect.

According to a fourth aspect of the present disclosure, there is provided a gas turbine engine comprising: the thermal barrier structure of the first aspect; the thermal barrier coating of the second aspect and/or the component or article of the third aspect. The present aspect may form part of and/or be used in conjunction with any other aspect.

According to a fifth aspect of the present disclosure, there is provided a method of forming a thermal barrier structure for coating a substrate, the method comprising: partially submerging a metal foam in a ceramic slurry. The metal foam may be only partially submerged in the slurry, such that the metal foam may be partially unsubmerged.

The method may comprise providing a mould tool having a step. The step may define a first region and a second region of the mould tool, the second region being wider than the first region. The method may comprise adding a ceramic slurry to the mould tool up to predetermined thickness or depth beyond the step. The slurry may submerge the step. The method may comprise inserting a metal foam into the mould tool as far as the step, optionally such that metal foam engages or abuts the step. The method may comprise impregnating the metal foam by the slurry.

The method may comprise applying pressure to the foam by a pressure plate, which may subsequently form a backing sheet. The method may comprise allowing the slurry to set, e.g., at room temperature or by heating, to form a green body. The method may comprise sintering the green body (attached to the metal foam). The thermal barrier structure may be removed from the mould tool after sintering. The present aspect may form part of and/or be used in conjunction with any other aspect.

According to a sixth aspect of the present disclosure, there is provided a method of forming a thermal barrier coating on a substrate, the method comprising forming, according to the fifth aspect, a thermal barrier structure; and attaching the thermal barrier structure to the substrate. The present aspect may form part of and/or be used in conjunction with any other aspect.

### BRIEF DESCRIPTION OF THE DRAWINGS

Embodiments will now be described by way of example only with reference to the accompanying drawings, which are purely schematic and not to scale, and in which:
**Fig. 1** is a cross-sectional view of an example gas turbine engine;
**Fig. 2A** is a sectional side view of a thermal barrier structure;
**Fig. 2B** is a sectional side view of the thermal barrier structure applied as a coating to a substrate;
**Fig. 3A** is a sectional side view of a mould tool;
**Fig. 3B** is a sectional side view of the mould tool of Fig. 3A being used to form a thermal barrier structure;
**Fig. 4** is a flowchart showing a method of forming a thermal barrier structure; and
**Fig. 5** is a flowchart showing a method of forming a thermal barrier coating on a substrate.

### DETAILED DESCRIPTION

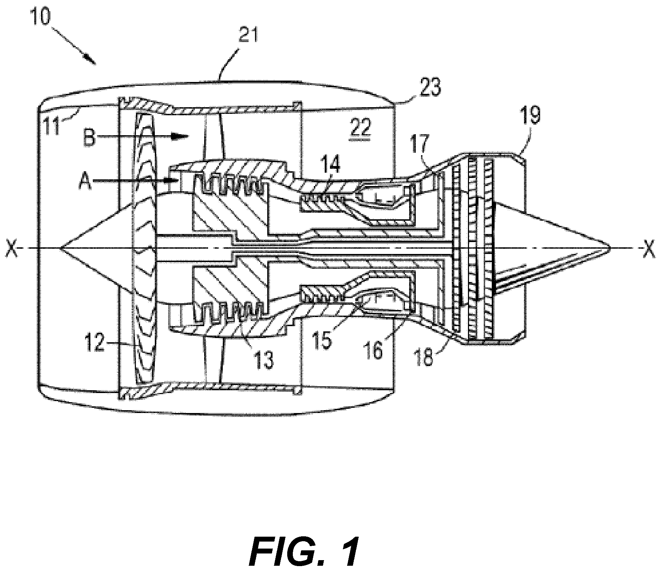

**Fig. 1** shows a ducted fan gas turbine engine 10 having a principal and rotational axis X-X. The engine comprises, in axial flow series, an air intake 11, a propulsive fan 12, an intermediate-pressure compressor 13, a high-pressure compressor 14, a combustor 15, a high-pressure turbine 16, an intermediate pressure turbine 17, a low-pressure turbine 18 and a core engine exhaust nozzle 19. A nacelle 21 generally surrounds the gas turbine engine 10 and defines the intake 11, a bypass duct 22 and a bypass exhaust nozzle 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate-pressure compressor 13 compresses the air flow A directed into it before delivering that air to the high-pressure compressor 14 where further compression takes place.

The compressed air exhausted from the high-pressure compressor 14 is directed into the combustor 15 where it is mixed with fuel and the mixture combusted. The resultant hot combustion products then expand through, and thereby drive the high, intermediate and low-pressure turbines 16, 17, 18 before being exhausted through the core engine exhaust nozzle 19 to provide additional propulsive thrust. The high, intermediate and low-pressure turbines respectively drive the high and intermediate pressure compressors 14, 13 and the fan 12 by suitable interconnecting shafts.

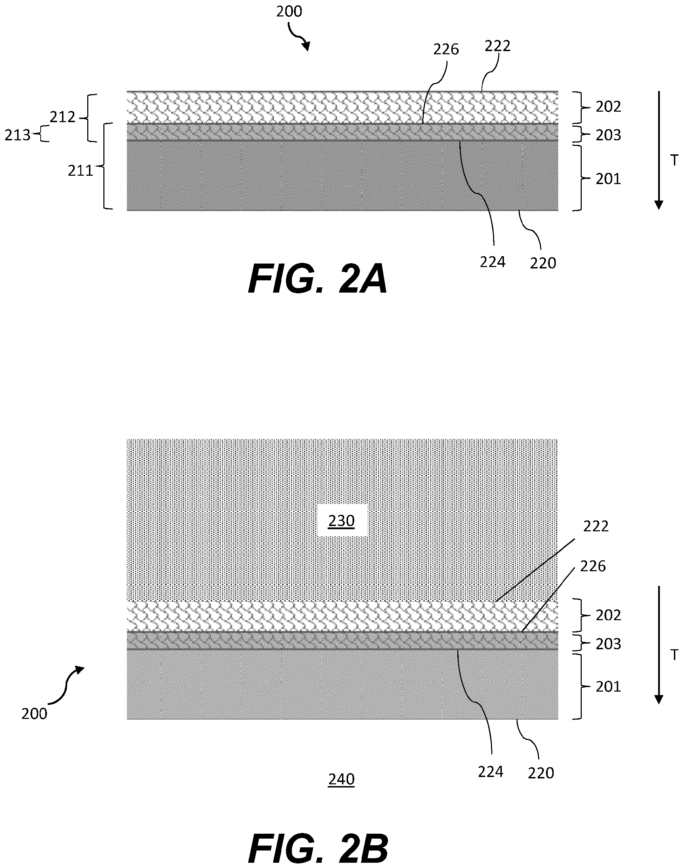

With reference to **Fig. 2A****,** a thermal barrier structure 200 is described. The thermal barrier structure 200 is suitable for coating metal components subjected to elevated operating temperatures in order to reduce the flow of heat into these components and thereby reduce any undesirable effects of the operating environment. For example, the thermal barrier structure 200 may be applied as a coating to the metal components of a gas turbine engine 10 downstream of the combustor 15, in order to reduce the undesirable effects of operating temperatures typically approaching or even exceeding the melting points of the substrate components.

**Fig. 2A** shows the thermal barrier structure 200 in isolation, such that the thermal barrier structure 200 is not attached to a substrate 230 (Fig 2B) requiring thermal insulation from its environment. Accordingly, the thermal barrier structure 200 in Fig. 2A is not termed a coating as it is not yet coating a substrate. However, once applied to a substrate, the thermal barrier structure 200 may be termed a thermal barrier coating.

The thermal barrier structure 200 comprises a first surface 220, configured to face outwardly into an operating environment, and a second surface 222, configured to face inwardly towards a component or substrate to be insulated or otherwise protected from its environment. A thickness direction T is defined perpendicularly to the first and second surfaces 220, 222, the thermal barrier structure 200 extending into and across the page with uniform thickness.

The thermal barrier structure 200 comprises a plurality of layers 201-203, stacked along the thickness direction T. Each of the layers 201-203 extends into and across the page with uniform thickness, the layers 201-203 thereby defining planar interfaces 224, 226 in parallel with the first and second surfaces 220, 222 and perpendicular to the thickness direction T. Although each layer 201-203 has a uniform thickness, the relative thicknesses of the layers 201-203 may differ as shown in Fig. 2.

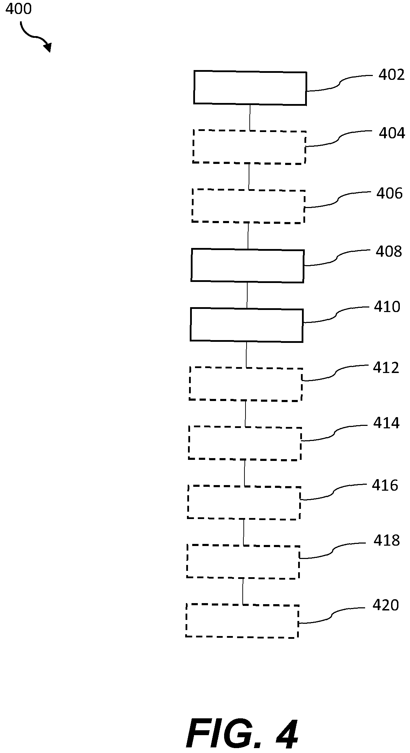

The thermal barrier structure 200 includes a first layer 201 comprising the first surface 220 of the thermal barrier structure 200, the first layer 201 extending inwardly from the first surface 220. The first layer 201 comprises a ceramic material with high temperature resistance and other refractory properties, such that the first layer 201 may be able to withstand extreme operating environments for an extended duration. Accordingly, the layer 201 is configured to face outwardly into a hot gas flow 240 to thereby form a substitute surface replacing an outer surface of a substrate 230 (Fig. 2B) which would otherwise be subjected to hot gas flow 240. The first layer 201 has a thickness of at least 2 mm which may be controlled according to the manufacturing process 400 (Fig. 4) described later.

The ceramic material may be manufactured from an array of oxide-based materials, such as compounds based around the alumina, silica or aluminosilicate ceramic families. As described later, the manufacturing method requires the ceramic to be in the liquid slurry state to allow for the metallic foam to be pressed and held in. The setting of the ceramic may require heat and/or a catalyst to create the finished material properties. The particular composition of the ceramic material may be selected based at least in part on its shrinkage characteristics during the setting and/or sintering processes (described in relation to Fig. 4). For example, ceramic compositions exhibiting low shrinkage properties may be particularly desirable as this may allow for net moulding of the final product form of the thermal barrier structure 200, reducing any post-forming steps. The first layer 201 may comprise one material (e.g., consist of a single material) or may be co-moulded as two or more materials. For example, the layer 201 may comprise metallic or non-metallic material in suspension to aid with physical or thermal properties.

The thermal barrier structure 200 additionally includes a second layer 202 comprising the second surface 222 of the thermal barrier structure 200. The second layer 202 comprises a metal foam comprising heat resistant metal such as nickel alloys and formed by processes such as additive layer manufacturing, casting techniques or electroplating of polymer foams. The second layer 202 extends away from the second surface 222 by a thickness of at least 0.1 mm, such as at least 2 mm, the thickness of the second layer 202 being controlled according to the manufacturing process 400 (Fig. 4).

The metal foam comprises an array of open cells having cell dimensions of between 0.1 and 10mm and/or a porosity of at least 10 pores per inch, such as at least 100 pores per inch. The cells may be arranged in a honeycomb or other structure having tessellated prismatic cells, or alternatively the cells may be substantially spherical. Due to the open structure of the second layer 202, a stiffness of second layer 202 is significantly less than that of the first layer 201. Accordingly, the second layer 202 is configured to act as a compliant layer between the metal substrate and the ceramic of the thermal barrier structure 200, the second layer being able to elastically deform in response to differential expansion between the first layer 201 and the metal substrate 230 (Fig. 2B). The materials of the first and second layers 201, 202 will typically have a static strain in excess of 0.1%.

The second surface 222 is configured to be attached to a substrate or component which the thermal barrier structure is to insulate from its environment. In particular, the second surface 222 may be joined, by brazing or welding techniques, to either a sheet or plate of metal manufactured from heat-resisting materials such as titanium, steel, cobalt or nickel alloys. The second surface 222 (e.g., prior to joining to a sheet or plate of metal) may have a rough, open cell structure.

Between the first and second layers 201, 202 is provided a third layer 203 comprising the metal foam of the second layer 202 and the ceramic material of the first layer 201. In particular, the metal foam and the ceramic material extend continuously into the third layer 203, such that the ceramic material is interspersed within, impregnates and/or fills the open cells of, the metal foam of the third layer 203. The third layer 203 has a thickness sufficient to ensure a strong attachment between the metal foam and the ceramic material, which may be between 1 and 2 mm depending on the metal foam and ceramic compositions. In order to aid impregnation of the metal foam by the ceramic slurry, the boundary of the foam forming interface 224 may be substantially open or unsealed, such that a ceramic slurry is readily able to impregnate the open cell network.

The first layer 201 therefore extends from the first surface 220 along the thickness direction T to an internal interface 224 formed with the metal foam of the third layer 203. Similarly, the second layer 202 extends from the second surface 222 along the thickness direction T to an internal interface 226 formed with the ceramic material of the third layer 203. The third layer 203 extends between the internal interfaces 224, 226 of the ceramic material and the metal foam. Accordingly, whilst the first layer 201 may consist essentially of the ceramic material, and the second layer 202 may consist essentially of the metal foam, the third layer 303 may comprise (e.g., consist essentially of) both the ceramic material and the metal foam.

As illustrated on the lefthand side of Fig. 2A, the thermal barrier structure 200 may be considered according to an alternative layer naming system. In particular, the thermal barrier structure 200 may be considered to comprise three alternative layers 211-213: a layer 211 extending between the first surface 220 and the interface 226 of the ceramic material furthest from the first surface 220; a layer 212 extending between the second surface 222 and the interface 224 of the metal foam furthest from the second surface 222; and a layer 213 defined by the overlap between the layers 211, 212, specifically between the interfaces 224, 226. In both layer naming systems, the layers 203, 213 are defined in the same manner as extending between the internal interfaces 224, 226.

As the first surface 220 is configured to face outwardly into an environment and the second surface 222 is configured to be face towards (e.g., be attached to) a substrate, it will be understood that the surfaces 220, 222 and the interfaces 224, 226 may be defined in relation to their position relative to the substrate once attached. For example, the first surface 220 may be termed the outermost surface, the second surface 222 may be termed the innermost surface, and the interfaces 224, 226 may be termed the outer internal interface 224 and the inner internal interface 226 respectively. The arrow of the thickness direction T may therefore point outwardly away from the substrate.

In use, the thermal barrier structure 200 is attached to a component or other substrate 230 to be protected from its environment. **Fig. 2B** shows the thermal barrier coating 200 *in situ*, attached to a metal component substrate 230 such as a gas wash surface of a gas turbine engine component (e.g., a hot gas wash surface of a component downstream of the combustor 15). In particular, the innermost surface 222 of the metallic foam layer 202 is directly attached to the surface of the substrate 230, whilst the first layer 201 faces outwardly and into the operating environment 240 such that the outermost surface 220 defines a replacement hot gas wash surface.

During operation, the temperature of the environment 240 increases, such that its temperature may approach or exceed the melting point of the substrate 230. The ceramic material of the first layer 201 at least partially reduces the flow of heat from the environment 240 into the substrate 230, such that the substrate 230 remains at a lower temperature than the environment 240. Accordingly, the thermal barrier structure 200 forms a thermal barrier coating on the substrate 230, such that the substrate 230 is at least partially thermally insulated or otherwise protected from its operating environment 240.

However, as a proportion of heat will still penetrate the first layer 201 and reach the substrate 230, the substrate 230 heats up and expands. Due to the differences in coefficients of thermal expansion between the metal substrate 230 and the ceramic material of the first layer 201, the substrate 230 will expand to a greater extent than the ceramic material. The metal foam elastically deforms in response to these differential thermal expansions and so acts as a compliant layer between the substrate 230 and the first layer 201. Accordingly, the thickness of the first layer 201 is no longer as strictly limited by the thermal stresses which can be tolerated by the ceramic material. The metal foam therefore allows a greater thickness of the first layer 201 and so the substrate 230-coating 200 assembly can be used in higher temperature environments than would otherwise be possible without the metal foam.

It will be understood that the thickness and composition of the metal foam may be selected according to the thermal expansion properties of the component substrate 230 and the thermal expansion properties of the ceramic material of the first layer 201.

The thermal barrier structure 200 may additionally comprise a metal backing sheet (not shown), such as along the surface 222. The metal backing sheet may improve an attachment between the metal foam and a substrate 230. For example, the metal backing sheet may have attachment features to allow the finished product to be fixed to the substrate component. The metal backing sheet may comprise a pressure plate previously attached to the metal foam during the manufacturing process 400.

Further, the thermal barrier structure 200 may comprise one or more additional ceramic layers. The additional ceramic layer(s) may be provided directly adjacent the outer interface 220 of the first layer 201, or alternatively provided with a further metal foam layer along the outer interface 220, such that one of the one or more additional ceramic layers may form the replacement hot gas wash surface of the substrate.

Similarly, a ceramic layer may be provided along a lateral boundary of the metal foam (e.g., extending in parallel with the thickness direction T), such that the external edges of the foam may be sealed or otherwise protected from the high temperature environment.

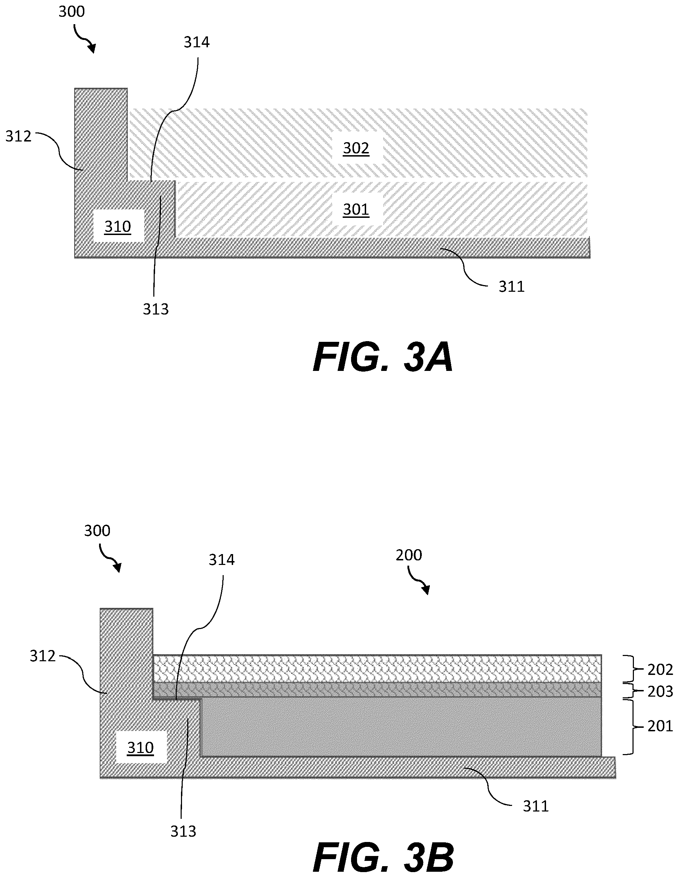

With reference to **Fig. 3A****,** a mould 300 for forming the thermal barrier structure 200 is described. The mould 300 comprises a mould body 310 having a base 311 and sides 312 defining a generally recessed geometry for receiving the materials for forming the thermal barrier structure 200. The mould tool may be manufactured from a number of materials which are resistant and/or impervious to the ceramic slurry.

The mould body 310 comprises a step 313 extending away from the base 311 and the sides 312. The step 313 is provided part way up the sides 312 such that the step 313 defines an upper surface 314 extending in parallel with the base 311. The step 313 effectively divides the recessed geometry of the mould 300 into a first region 301, extending from the base 311 to the level of the surface 314, and a second region 302, extending upwards from the level of the surface 302 towards the top of the mould 300.

Although only part of the mould 300 is illustrated in Fig. 3, it will be understood that the sides 312 and the step 313 may extend throughout the mould 300 such that the upper surface 314 of the step 313 may extend throughout the mould 300. Similarly, although the mould 300 is shown horizontally in Fig. 3A, it will be understood that the mould 300 may alternatively be provided vertically, such that the step 313 divides the mould along a vertical plane.

With reference to **Figs. 3B** **and** **4****,** a method 400 of forming a thermal barrier structure 200 is described. The method 400 comprises 402 providing a mould, such as the mould tool 300, and optionally 404 coating the mould tool 300 with a release agent.

The method 400 may then comprise 406 forming a liquid slurry comprising ceramic particles held in a suspension. Depending on the material composition chosen, the slurry may be manufactured using an array of techniques, optionally involving the use of ball mixers, planetary mixers, reaction vessels etc. The slurry is formed with a viscosity appropriate for the conditions of application. For example, the consistency of butter icing may be preferable to allow the slurry to be spread onto the mould tool surface and the slurry maintains its form even if applied on vertical surfaces. The ceramic slurry composition may be selected so as to be stable in liquid form for a sufficient duration to allow for subsequent manufacturing operations to happen. For example, the material may comprise of an array of advanced ceramics including geopolymers, sol-gels or metal phosphates, which require a low amount of heat to become a green body, with initial setting between -18°C to 300°C depending on the material. Further, these materials may be fully sintered at temperatures of greater than 500°C to gain full performance.

Once the ceramic particles are in suspension, the method 400 comprises applying 408 the slurry to the mould, such as by pouring or spreading the slurry into the first region 301 of the mould 300 up to a predetermined depth. As shown in Fig. 3B, the predetermined depth exceeds the height of the step surface 314, such that the slurry fully occupies region 301 and partially occupies region 302.

The method 400 then comprises 410 placing the metal foam partially into the slurry. For example, the metal foam may be placed onto the step surface 314 such that a lower portion of the metal foam is submerged in the slurry to the extent that the predetermined slurry depth exceeds the height of the step 313. An upper portion of the foam, corresponding to the second layer 202, remains unsubmerged in the slurry. This ensures that the ceramic slurry impregnates the metal foam and so the metal foam and the ceramic slurry overlap with one another to a predetermined extent. The predetermined extent of impregnation may closely define the thickness of the third layer 203, 213 (dependent on the shrinkage of the particular ceramic and slurry compositions). Similarly, the dimensions of the metal foam remaining unsubmerged determines the thickness of the second layer 202.

At step 412, the method may comprise applying pressure using a pressure plate (not shown) to ensure the foam is evenly inserted into the ceramic layer. The pressure plate may subsequently form the metal backing plate described previously. Alternatively, the density of the metal foam and the viscosity of the ceramic slurry may be such that no additional pressure is required to aid foam impregnation.

At step 414, the method 400 may comprise allowing the slurry to set. Depending on the ceramic composition, this may happen at room temperature, or may need assistance with some heat. A low shrinkage composition may be particularly desirable so that the degree of dimensional and geometric change during setting is minimised, such that any machining steps prior to attachment to a substrate 230 may also be minimised. Upon setting, the ceramic is transformed into the green state.

To progress the ceramic into its final material state, a sinter cycle using a furnace may be required for certain ceramic compositions. Accordingly, the method 400 may comprise 416 sintering the green ceramic. Once the material has reached its final state, the method 400 may comprise 416 unloading the thermal barrier structure 200 from the mould tool 300 and optionally 418 machining the thermal barrier structure 200 ready for assembly into the gas turbine engine 10 or other application.

The method 400 may then comprise 420 attaching the thermal barrier structure 200 to a metallic component, such as a hot gas wash surface of a gas turbine engine 10, downstream of the combustor 15.

In summary, the method 400 may minimally comprise steps 402, 408, 410, but may additionally comprise any combination of steps 404, 406, 412-420.

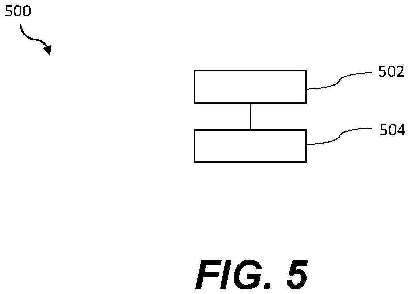

With reference to **Fig. 5****,** a method 500 of forming a thermal barrier coating 200 on a substrate 230 is described. The method 500 comprises 502 forming a thermal barrier structure 200, such as according to the method 400. The method 500 additionally comprises attaching the thermal barrier structure 200 to the substrate 230. The thermal barrier structure 200 may comprise a metal backing plate (not shown) (e.g., immediately adjacent the second layer on surface 222), and the metal backing plate may be attached to the substrate.

Various examples have been described, each of which features various combinations of features. It will be appreciated by those skilled in the art that, except where clearly mutually exclusive, any of the features may be employed separately or in combination with any other features and the disclosure extends to and includes all combinations and sub-combinations of one or more features described herein.

## Claims

1. A thermal barrier structure for coating a substrate, the thermal barrier structure comprising:
a first layer comprising a ceramic material;
a second layer comprising a metal foam; and
a third layer comprising the ceramic material and the metal foam

2. The thermal barrier structure of Claim 1, wherein the second layer is configured to be attached to the substrate.

3. The thermal barrier structure of Claim 1 or Claim 2, wherein the first layer is configured to form an outermost surface of the thermal barrier structure.

4. The thermal barrier structure of any one of the preceding claims, wherein the metal foam comprises an open cell foam.

5. The thermal barrier structure of Claim 1, wherein the third layer is provided between the first layer and the second layer.

6. The thermal barrier structure of Claim 1 or Claim 5, wherein in the third layer, the ceramic material is interspersed with the metal foam.

7. The thermal barrier structure of any one of the preceding claims, wherein the layers are distinct.

8. The thermal barrier structure of any one of the preceding claims, wherein:
the first layer consists essentially of the ceramic material;
the second layer consists essentially of the metal foam; and
optionally the third layer consists essentially of the ceramic material and the metal foam.

9. The thermal barrier structure of any one of Claims 1 to 7, wherein the third layer is defined by an overlap between the first layer and the second layer.

10. The thermal barrier structure of any one of the preceding claims, wherein the ceramic material comprises an oxide-based ceramic, optionally an alumina, silica and/or aluminosilicate ceramic.

11. The thermal barrier structure of any one of the preceding claims, wherein the metal foam comprises a nickel alloy.

12. The thermal barrier structure of any one of the preceding claims, further comprising a backing plate adjacent the second layer, the backing plate being configured to be attached to the substrate.

13. The thermal barrier structure of any one of the preceding claims, wherein the metal foam has a porosity of at least 10 pores per inch, optionally at least 100 pores per inch.

14. The thermal barrier structure of any one of the preceding claims, wherein the first layer has a thickness of at least 2 mm.

15. The thermal barrier structure of any one of the preceding claims, wherein the second layer has a thickness of at least 2 mm.
